# EUROPEAN PATENT APPLICATION

(11) **EP 4 734 208 A1**
(43) Date of publication of application: **29.04.2026**
(21) Application number: 24851551.2
(22) Date of filing: 17.07.2024
(51) Int. Cl.: H01M 10/0525, H01G 11/24, H01G 11/46, H01M 4/505, H01M 4/525, H01M 4/587

(54) **NON-AQUEOUS ELECTROLYTE POWER STORAGE ELEMENT**

(30) Priority: 04.08.2023 JP 2023128089
(71) Applicant: GS Yuasa International Ltd., Kisshoin, Minami-ku, Kyoto-shi, Kyoto 601-8520 (JP)
(72) Inventor: YAMAKAWA, Yuto, Kyoto-shi, Kyoto 601-8520 (JP)
(74) Representative: Isarpatent
(86) International application number: PCT/JP2024/025588
(87) International publication number: WO 2025/033122

(57) **Abstract**

A non-aqueous electrolyte energy storage device according to one aspect of the present invention includes: a positive electrode including a lithium-transition metal composite oxide containing nickel and manganese; and a negative electrode including graphite, in which a molar ratio of cobalt to manganese in the lithium-transition metal composite oxide is less than 1.0, a molar ratio of nickel to manganese in the lithium-transition metal composite oxide is more than 1.0 and 1.5 or less, and a depth of charge of the graphite in a charged state is more than 0.40 and less than 0.65.

## Description

### TECHNICAL FIELD

The present invention relates to a non-aqueous electrolyte energy storage device.

### BACKGROUND ART

Non-aqueous electrolyte secondary batteries, whose typical examples are lithium-ion secondary batteries, are often used in electronic devices such as personal computers and communication terminals, automobiles, and the like, owing to their high energy density. Generally, the non-aqueous electrolyte secondary battery includes: a pair of electrodes electrically isolated from each other by a separator; and a non-aqueous electrolyte interposed between the electrodes, and is configured to be charged and discharged by transfer of charge-transporting ions between the two electrodes. As non-aqueous electrolyte energy storage devices other than the non-aqueous electrolyte secondary batteries, capacitors such as lithium-ion capacitors, electric double layer capacitors, or the like, have also been widely used.

Conventionally, lithium-transition metal composite oxides having an α-NaFeO₂-type crystal structure have been studied as a positive active material for the non-aqueous electrolyte energy storage devices, and LiNi_{1/3}Co_{1/3}Mn_{1/3}O₂, for example, has been developed and put into practical use (see Patent Literature 1). Meanwhile, as a negative active material, a carbon material such as graphite is widely used (see Patent Literature 2).

### CITATION LIST

### Patent Literature

Patent Literature 1: Japanese Unexamined Patent Application Publication No. 2015-18678
Patent Literature 2: Japanese Unexamined Patent Application Publication No. 2005-222933

### DISCLOSURE OF INVENTION

### PROBLEMS TO BE SOLVED BY THE INVENTION

Since the scarcity of cobalt is high, a positive active material having a high cobalt content has disadvantages such as high manufacturing cost and difficulty in stable supply. Therefore, it is preferable to use a positive active material having a low cobalt content. However, a non-aqueous electrolyte energy storage device using a lithium-transition metal composite oxide having a low cobalt content as the positive active material has high resistance after charge and discharge cycles, and there are cases where output performance and the like are not sufficient.

An object of the present invention is to provide a non-aqueous electrolyte energy storage device using a lithium-transition metal composite oxide having a low cobalt content, the device having low resistance after charge and discharge cycles.

### MEANS FOR SOLVING THE PROBLEMS

A non-aqueous electrolyte energy storage device according to one aspect of the present invention includes: a positive electrode including a lithium-transition metal composite oxide containing nickel and manganese; and a negative electrode including graphite, in which a molar ratio of a cobalt to manganese in the lithium-transition metal composite oxide is less than 1.0, a molar ratio of nickel to manganese in the lithium-transition metal composite oxide is more than 1.0 and 1.5 or less, and a depth of charge of the graphite in a charged state is more than 0.40 and less than 0.65.

### EFFECT OF THE INVENTION

According to one aspect of the present invention, it is possible to provide a non-aqueous electrolyte energy storage device using a lithium-transition metal composite oxide having a low cobalt content, the device having low resistance after charge and discharge cycles.

### BRIEF DESCRIPTION OF DRAWINGS

[FIG. 1] FIG. 1 is a see-through perspective view illustrating an embodiment of a non-aqueous electrolyte energy storage device.
[FIG. 2] FIG. 2 is a schematic view illustrating an embodiment of an energy storage apparatus which is configured by assembling a plurality of non-aqueous electrolyte energy storage devices.

### DESCRIPTION OF EMBODIMENTS

First, an outline of a non-aqueous electrolyte energy storage device disclosed in the present specification will be described.

[1] A non-aqueous electrolyte energy storage device according to one aspect of the present invention includes: a positive electrode including a lithium-transition metal composite oxide containing nickel and manganese; and a negative electrode including graphite, in which a molar ratio of cobalt to manganese in the lithium-transition metal composite oxide is less than 1.0, a molar ratio of nickel to manganese in the lithium-transition metal composite oxide is more than 1.0 and 1.5 or less, and a depth of charge of the graphite in a charged state is more than 0.40 and less than 0.65.

The non-aqueous electrolyte energy storage device according to [1] described above is a non-aqueous electrolyte energy storage device for which a lithium-transition metal composite oxide having a low cobalt content is used, and the resistance thereof after charge and discharge cycles is low. Although the reason for this is not clear, the following factors are presumed.

First, in the non-aqueous electrolyte energy storage device according to [1] described above, the lithium-transition metal composite oxide in which the molar ratio of cobalt to manganese is less than 1.0 is used. Thus, the content of cobalt is small. In the lithium-transition metal composite oxide, when an amount of lithium extracted per mass of the lithium-transition metal composite oxide in a charged state is large, cracking is likely to occur. Thus, electron conductivity between active material particles decreases with repetition of charge and discharge cycles. As a result, the resistance after the charge and discharge cycles tends to be high. Specifically, when the molar ratio of nickel to manganese is high, an amount of electricity charged per mass of the lithium-transition metal composite oxide is large. Thus, the amount of lithium extracted per mass of the lithium-transition metal composite oxide in the charged state becomes large, and cracking is likely to occur. In contrast, by using a lithium-transition metal composite oxide in which the molar ratio of nickel to manganese is more than 1.0 and 1.5 or less, the amount of lithium extracted per mass of the lithium-transition metal composite oxide in the charged state is appropriately adjusted, and cracking is less likely to occur. In addition, when the depth of charge of graphite in a charged state is high (deep), a volume expansion amount of the individual graphite particles in the charged state increases, so that an expansion amount of the negative electrode as a whole also increases. Accordingly, the negative electrode strongly presses the positive electrode, whereby cracking of the lithium-transition metal composite oxide is likely to occur. Meanwhile, when the depth of charge of the graphite in the charged state is low (shallow), an amount of graphite per unit area in the negative electrode is designed to be relatively large. For this reason, even though the volume expansion amount of the individual graphite particles in the charged state is small, the expansion amount of the negative electrode as a whole is increased. Consequently, also in this case, cracking of the lithium-transition metal composite oxide is likely to occur because the negative electrode strongly presses the positive electrode. In contrast to the above phenomena, when the depth of charge of the graphite in the charged state is more than 0.40 and less than 0.65, the expansion amount of the negative electrode as a whole in the charged state is minimized and a force at which the negative electrode presses the positive electrode is weakened. Therefore, cracking of the lithium-transition metal composite oxide is less likely to occur.

For the reasons given above, it is presumed that the non-aqueous electrolyte energy storage device according to [1] described above achieves the advantageous effect that while a lithium-transition metal composite oxide having a low cobalt content is being used, the resistance after charge and discharge cycles of the non-aqueous electrolyte energy storage device is low.

The element composition ratio of the lithium-transition metal composite oxide shall be defined as the element composition ratio of a lithium-transition metal composite oxide in a state before performing charge and discharge of the non-aqueous electrolyte energy storage device, such as a raw material powder for use in manufacturing the non-aqueous electrolyte energy storage devices. Further, in the lithium-transition metal composite oxide contained in the positive electrode of the non-aqueous electrolyte energy storage device, the element composition ratio refers to that in a completely discharged state subjected to treatment by the following procedure. First, the non-aqueous electrolyte energy storage device is brought into a fully charged state by performing a constant current charge at a charge current of 0.05 C until a voltage reaches a charge cutoff voltage at the time of normal use. After a rest of 30 minutes, a constant current discharge is performed at a discharge current of 0.05 C until the voltage indicates a discharge cutoff voltage at the time of normal use. The non-aqueous electrolyte energy storage device is disassembled to take out the positive electrode, and a test battery is assembled using the taken out positive electrode as a working electrode and a metallic lithium electrode as a counter electrode. Pure metallic lithium is used for the metallic lithium electrode in this case. A constant current discharge is performed for the test battery at a current of 10 mA per 1 g of the positive active material until the positive electrode potential indicates 2.0 V (vs. Li/Li⁺), thereby adjusting the positive electrode to a completely discharged state. Disassembly is conducted again to take out the positive electrode. A non-aqueous electrolyte adhering to the taken out positive electrode is sufficiently washed with dimethyl carbonate or the like, and after drying the positive electrode at room temperature for 24 hours or more, lithium-transition metal composite oxide of the positive active material is collected. The collected lithium-transition metal composite oxide is subjected to measurement. The operation from the disassembly of the non-aqueous electrolyte energy storage device to the collection of the lithium-transition metal composite oxide is carried out in an argon atmosphere having a dew point of less than or equal to -60 °C. The above "at the time of normal use" refers to a case of using the non-aqueous electrolyte energy storage device by adopting charge and discharge conditions recommended or specified for the non-aqueous electrolyte energy storage device. For example, when a device for using the non-aqueous electrolyte energy storage device is prepared, "at the time of normal use" refers to the case of using the non-aqueous electrolyte energy storage device by applying that device.

"Graphite" refers to a carbon material in which the average interplanar spacing (d₀₀₂) of the (002) plane, determined by an X-ray diffraction method in a state before charge and discharge or in a discharge state, is 0.33 nm or more and less than 0.34 nm. The "discharged state" of a carbon material means a state in which the carbon material, which is a negative active material, has been discharged such that lithium ions which can be occluded and released during charge and discharge are sufficiently released. For example, in a half-cell in which a negative electrode containing a carbon material as the negative active material is used as a working electrode and metallic lithium is used as a counter electrode, the "discharged state" refers to the state in which an open circuit voltage is 0.7 V or more.

The above "depth of charge of the graphite in a charged state" refers to the ratio of the amount of electricity charged per mass of the graphite in a charged state to a theoretical capacity per mass of the graphite. The "theoretical capacity" refers to the maximum amount of electricity that can be stored in a unit mass of the active material in an assumed electrochemical reaction. In the present specification, the theoretical capacity of the graphite is assumed to be 372 mAh/g. In addition, the "charged state" refers to a state in which the non-aqueous electrolyte energy storage device is charged to a rated upper limit voltage for ensuring a rated capacity determined in advance by design. Further, if the rated capacity is not clear, the charged state refers to a state in which the non-aqueous electrolyte energy storage device is charged until a voltage reaches the charge cutoff voltage at which a charging operation is controlled to be stopped when the charge is performed using a charge control apparatus provided in a device for using the non-aqueous electrolyte energy storage device. For example, a state in which a constant current charge is performed for the non-aqueous electrolyte energy storage device at a current of 1/3 C until a voltage reaches the rated upper limit voltage or the charge cutoff voltage, and then a constant voltage charge is performed for the non-aqueous electrolyte energy storage device at the rated upper limit voltage or the charge cutoff voltage until the current indicates 0.01 C is a typical example of the "charged state" in this case. Specifically, it is assumed that the "amount of electricity charged per mass of the graphite in a charged state" is measured by the following procedure.
(1) After discharging a target non-aqueous electrolyte energy storage device to a lower limit voltage at which the rated capacity is obtained, the target non-aqueous electrolyte energy storage device is disassembled in a glove box controlled to be under an argon atmosphere in which the oxygen density is 5 ppm or less.
(2) In the glove box, the positive electrode and the negative electrode are taken out and a small pouch cell (I) is assembled.
(3) After charging the small pouch cell (I) and bringing the small pouch cell (I) into the charged state, a constant current discharge is performed at a current of 0.01 C until the voltage indicates the lower limit voltage at which the rated capacity is obtained for the non-aqueous electrolyte energy storage device.
(4) The small pouch cell (I) is disassembled in the glove box controlled to be under the argon atmosphere in which the oxygen concentration is 5 ppm or less, the negative electrode is taken out, and a small pouch cell (II) in which lithium metal is disposed as a counter electrode is assembled.
(5) The small pouch cell (II) is additionally discharged at a current of 0.01 C until the voltage indicates 2.0 V, and the negative electrode is adjusted to be in the discharged state.
(6) A total amount of the discharged electricity in the above (3) and (5) is divided by the mass of the graphite at a positive-negative electrode facing portion in the small pouch cell (I) to obtain the amount of electricity charged per mass of the graphite in the charged state.

Here, a reduction reaction in which lithium ions are occluded in the negative active material is referred to as the "charge", and an oxidation reaction in which the lithium ions are released from the negative active material is referred to as the "discharge".

[2] In the non-aqueous electrolyte energy storage device according to [1] described above, the molar ratio of cobalt to manganese in the lithium-transition metal composite oxide may be 0.15 or more and less than 1.0.

The non-aqueous electrolyte energy storage device according to [2] described above achieves, by virtue of the feature that the lithium-transition metal composite oxide contains an appropriate amount of cobalt , not only the advantageous effect of the non-aqueous electrolyte energy storage device according to [1] described above, but also an advantageous effect that the amount of electricity charged per mass of the positive active material is large.

[3] In the non-aqueous electrolyte energy storage device according to [1] or [2] described above, an internal void ratio of the graphite may be 2% or less.

In the graphite having a low internal void ratio, a change in the volume due to the charge and discharge cycles is small. Since graphite whose volume change is small is used for the non-aqueous electrolyte energy storage device according to [3] described above, the resistance of the non-aqueous electrolyte energy storage device after the charge and discharge cycles is further reduced.

The "internal void ratio" of the graphite refers to an area ratio of the voids within particles to the area of the particles as a whole in a cross section of the graphite particles observed in a scanning electron microscope (SEM) image obtained by using a SEM. The "internal void ratio (area ratio of the voids within particles to the area of the particles as a whole)" in the graphite can be determined by the following procedure.

### (1) Preparation of measurement sample

A negative electrode to be measured is fixed with a thermosetting resin. A cross section of the negative electrode which has been fixed with the resin is exposed by an ion milling method to prepare a measurement sample. The negative electrode to be measured is prepared by the following procedure. When a negative electrode before assembling the non-aqueous electrolyte energy storage device can be prepared, that negative electrode is used as it is. In a case where the negative electrode to be measured is prepared from the assembled non-aqueous electrolyte energy storage device, first, a constant current discharge is performed for the non-aqueous electrolyte energy storage device at a current of 0.1 C until the voltage indicates the discharge cutoff voltage at the time of normal use. The non-aqueous electrolyte energy storage device is disassembled to take out the negative electrode, and after sufficiently washing the negative electrode with dimethyl carbonate or the like, the negative electrode is dried under reduced pressure at room temperature for 24 hours. The operation from the disassembly of the non-aqueous electrolyte energy storage device to the preparation of the negative electrode to be measured is carried out in a dry air atmosphere having a dew point of less than or equal to -40 °C.

### (2) SEM image acquisition

JSM-7001F (manufactured by JEOL Ltd.) is used as the SEM to acquire the SEM image. As the SEM image, a secondary electron image is observed. It is assumed that an acceleration voltage is 5 kV. An observation magnification is set to a magnification at which the number of graphite particles appearing in a single visual field is in the range of 3 or more and 15 or less. The acquired SEM image is saved as an image file. In addition, various conditions such as a spot diameter, a working distance, an illumination current, luminance, and a focus are set as appropriate such that outlines of the graphite particles become clear.

### (3) Cutting out outlines of graphite particles

The outlines of the graphite particles are cut out from the acquired SEM image by using an image cutout function of Adobe Photoshop Elements 11, which is image-editing software. The cutting out of the outlines is performed by selecting the outer side of the outlines of the graphite particles by using a Quick Selection Tool, and editing the area other than the graphite particles into a black background. At this time, when the number of the graphite particles whose outlines can be cut out is less than three, the SEM image is acquired again to repeat this process until the number of the graphite particles whose outlines can be cut out becomes three or more.

### (4) Binarization processing

For the image of the first graphite particle among the cut graphite particles, binarization processing is performed by using PopImaging 6.00, which is image analysis software, with a density that is 20% lower than the density at which the intensity is maximized being set as a threshold value. As an area on the side of a higher density is calculated by the binarization processing, "area S1 of voids within the particle" is obtained.

Next, for the image of the same first graphite particle mentioned above, binarization processing is performed with the density of 10% being set as the threshold value. As an outer edge of the graphite particle is determined and the area inside the outer edge is calculated by the binarization processing, "area S0 of the whole particle" is obtained. A ratio of S1 to S0 (S1/S0) is calculated using the calculated S1 and S0, thereby calculating "area ratio R1 of the voids within the particle to the area of the whole particle" for the first graphite particle.

For each of the images of the second and subsequent graphite particles among the cut graphite particles, the above-described binarization processing is performed to calculate the area S1 and the area S0. On the basis of the calculated area S1 and area S0, area ratios R2, R3, and so on of the voids within the respective graphite particles are calculated.

### (5) Determination of area ratio of voids

The "area ratio of the voids (void ratio) within particles to the area of the particles as a whole" is determined by calculating the average value of all of the area ratios R1, R2, R3, and so on of the voids calculated by the binarization processing.

[4] In the non-aqueous electrolyte energy storage device according to any one of [1] to [3] described above, a molar ratio (Ni/Me) of nickel to all metallic elements (Me) excluding lithium in the lithium-transition metal composite oxide may be 0.35 or more and 0.60 or less.

The non-aqueous electrolyte energy storage device according to [4] has a sufficient amount of electricity charged due to the feature that the molar ratio of nickel is not less than the above-described lower limit value. Further, because the molar ratio of nickel is not more than the above-described upper limit value, excellent thermal stability is provided.

[5] In the non-aqueous electrolyte energy storage device according to any one of [1] to [4] described above, a molar ratio (Co/Me) of cobalt to all metallic elements (Me) excluding lithium in the lithium-transition metal composite oxide may be 0.05 or more and 0.30 or less.

The non-aqueous electrolyte energy storage device according to [5] has appropriate high-rate discharge performance due to the feature that the molar ratio of cobalt is not less than the above-described lower limit value. Further, because the molar ratio of cobalt is not more than the above-described upper limit value, manufacturing costs can be suppressed.

[6] In the non-aqueous electrolyte energy storage device according to any one of [1] to [5] described above, a molar ratio (Mn/Me) of manganese to all metallic elements (Me) excluding lithium in the lithium-transition metal composite oxide may be 0.30 or more and 0.50 or less.

In the non-aqueous electrolyte energy storage device according to [6], since the molar ratio of manganese is not less than the above-described lower limit value, the positive electrode potential at a state of charge (SOC) of 50% is increased. By this feature, output performance and the like of the non-aqueous electrolyte energy storage device can be enhanced, and also, the manufacturing cost can be suppressed. Further, because the molar ratio of manganese is not more than the above-described upper limit value, it is possible to suppress deterioration in the performance due to repetition of charge and discharge or overcharge.

[7] In the non-aqueous electrolyte energy storage device according to any one of [1] to [6] described above, the lithium-transition metal composite oxide may have a layered α-NaFeO₂-type crystal structure and may be represented by the following formula (1).

(1): Li_{1+α}Me_{1-α}O₂

In the formula (1), Me is a metallic element other than Li, including Ni and Mn. The range of α is 0 ≤ α <1.

The non-aqueous electrolyte energy storage device according to [7] more reliably has the advantageous effect of the present invention.

[8] In the non-aqueous electrolyte energy storage device according to [7] described above, Me in the formula (1) is represented as NiₐCo_{b}Mn_{c}, in which a, b, and c may satisfy a + b + c = 1, where 0.33 ≤ a ≤ 0.60, 0 ≤ b ≤ 0.33, and 0.29 ≤ c ≤ 0.50.

The non-aqueous electrolyte energy storage device according to [8] even more reliably has the advantageous effect of the present invention.

[9] The non-aqueous electrolyte energy storage device according to any one of [1] to [8] may be used for a hybrid electric vehicle.

The non-aqueous electrolyte energy storage device according to [1] to [8] described above can be particularly suitably used for a hybrid electric vehicle due to the feature that the resistance thereof after charge and discharge cycles is low, for example.

A non-aqueous electrolyte energy storage device, an energy storage apparatus, a method for manufacturing a non-aqueous electrolyte energy storage device according to one embodiment of the present invention, and other embodiments of the present invention will be described in detail. The names of constituent members (constituent elements) used in the embodiments may be different from the names of constituent members (constituent elements) used in the background art.

### <Non-aqueous Electrolyte Energy Storage Device>

A non-aqueous electrolyte energy storage device (hereinafter also simply referred to as an "energy storage device") according to one embodiment of the present invention includes: an electrode body including a positive electrode, a negative electrode, and a separator; a non-aqueous electrolyte; and a container for accommodating therein the electrode body and the non-aqueous electrolyte. The electrode body is usually a stacked type in which a plurality of positive electrodes and a plurality of negative electrodes are stacked with separators interposed therebetween, or a wound type in which a positive electrode and a negative electrode are wound in such a state that they are stacked with a separator interposed therebetween. The non-aqueous electrolyte exists in such a state that the positive electrode, the negative electrode, and the separator are impregnated with the non-aqueous electrolyte. As an example of the non-aqueous electrolyte energy storage device, a non-aqueous electrolyte secondary battery (hereinafter also simply referred to as a "secondary battery") will be described.

### (Positive electrode)

The positive electrode includes a positive electrode substrate and a positive active material layer which is disposed on the positive electrode substrate directly or via an intermediate layer.

The positive electrode substrate has conductivity. Whether or not the positive electrode substrate has "conductivity" is determined on the basis of a volume resistivity measured in conformity with JIS H 0505:1975, with 10⁻² Ω·cm being assumed as a threshold value. As the material of the positive electrode substrate, a metal such as aluminum, titanium, tantalum, or stainless steel, or an alloy thereof is used. Among the above, aluminum or an aluminum alloy is preferable from the standpoint of potential resistance, high conductivity, and cost. Examples of the positive electrode substrate include a foil, a vapor-deposited film, a mesh, and a porous material and a foil is preferable from the standpoint of cost. Therefore, an aluminum foil or an aluminum alloy foil should preferably be used for the positive electrode substrate. As the aluminum or aluminum alloy, A1085, A3003, and A1N30, for example, specified in JIS H 4000:2014 or JIS H 4160:2006 are exemplified.

An average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. As the average thickness of the positive electrode substrate is set to be within the above range, an energy density per volume of the non-aqueous electrolyte energy storage device can be increased while increasing the strength of the positive electrode substrate.

The intermediate layer is a layer which is disposed between the positive electrode substrate and the positive active material layer. As the intermediate layer contains a conductive agent such as carbon particles, contact resistance between the positive electrode substrate and the positive active material layer is reduced. A configuration of the intermediate layer is not particularly limited, and contains, for example, a binder and a conductive agent.

The positive active material layer contains a positive active material. The positive active material layer contains, as necessary, optional ingredients such as a conductive agent, a binder (a binding agent), a thickener, and a filler.

The positive active material contains a lithium-transition metal composite oxide containing nickel and manganese. The lithium-transition metal composite oxide may or may not contain cobalt.

The molar ratio (Co/Mn) of cobalt to manganese in the lithium-transition metal composite oxide is less than 1.0. The upper limit of the molar ratio (Co/Mn) may be 0.95, or may be 0.90, 0.85, 0.80, 0.75, 0.70, 0.65, 0.60, 0.55, 0.50, or 0.45. As the molar ratio (Co/Mn) is less than the above-described upper limit or less than or equal to the above-described upper limit, the amount of cobalt used can be reduced, whereby a production cost can be suppressed. The lower limit of the molar ratio (Co/Mn) may be 0.00, but is preferably 0.15, and may be 0.20, 0.25, 0.30, 0.35, 0.40, 0.45, 0.50, 0.55, 0.60, 0.65, 0.70, or 0.75. As the molar ratio (Co/Mn) is greater than or equal to the above-described lower limit, the amount of electricity charged per mass of the positive active material is increased. The molar ratio (Co/Mn) may be a combination of any of the above-described lower limits and any of the above-described upper limits (provided that the lower limit is smaller than the upper limit).

The molar ratio (Ni/Mn) of nickel to manganese in the lithium-transition metal composite oxide is more than 1.0 and 1.5 or less. The lower limit of the molar ratio (Ni/Mn) may be 1.10, or may be 1.15, 1.20, or 1.25. The upper limit of the molar ratio (Ni/Mn) may be 1.45, 1.40, 1.35, 1.30, or 1.25. As the molar ratio (Ni/Mn) is within the above-described range, the amount of lithium extracted from the lithium-transition metal composite oxide during a charge becomes moderate, and cracking is less likely to occur. As a result, the resistance after charge and discharge cycles can be reduced. The molar ratio (Ni/Mn) may be a combination of any of the above-described lower limits and any of the above-described upper limits (provided that the lower limit is smaller than the upper limit).

The lithium-transition metal composite oxide may further contain a transition metallic element other than nickel, manganese, and cobalt, a typical metallic element other than lithium, such as aluminum and the like. However, the lower limit of the molar ratio ((Ni + Mn + Co)/Me) of a total of nickel, manganese, and cobalt to all the metallic elements (Me) excluding lithium in the lithium-transition metal composite oxide is preferably 0.9, more preferably 0.95, and still more preferably 0.99. When the metallic elements other than lithium in the lithium-transition metal composite oxide are substantially composed of two elements, which are nickel and manganese, or three elements, which are nickel, manganese, and cobalt, such an advantageous effect that the resistance after charge and discharge cycles is low is particularly sufficiently achieved.

The molar ratio (Ni/Me) of nickel to all the metallic elements (Me) excluding lithium in the lithium-transition metal composite oxide is preferably 0.30 or more and 0.60 or less, more preferably 0.35 or more and 0.60 or less, still more preferably 0.35 or more and 0.55 or less, and yet still more preferably 0.40 or more and 0.50 or less.

The molar ratio (Mn/Me) of manganese to all the metallic elements (Me) excluding lithium in the lithium-transition metal composite oxide is preferably 0.20 or more and 0.50 or less, more preferably 0.25 or more and 0.45 or less, and still more preferably 0.30 or more and 0.40 or less. The molar ratio (Mn/Me) may be preferably 0.30 or more and 0.50 or less, and may be preferably 0.30 or more and 0.45 or less. As the molar ratio (Mn/Me) is greater than or equal to the above-described lower limit, for example, the positive electrode potential at the SOC of 50% is increased, and the output performance and the like of the non-aqueous electrolyte energy storage device can be enhanced.

The molar ratio (Co/Me) of cobalt to all the metallic elements (Me) excluding lithium in the lithium-transition metal composite oxide is preferably 0.00 or more and less than 0.33, more preferably 0.05 or more and 0.30 or less, still more preferably 0.10 or more and 0.28 or less, and yet still more preferably 0.15 or more and 0.25 or less.

As the lithium-transition metal composite oxide, a lithium-transition metal composite oxide having a layered α-NaFeO₂-type crystal structure is preferable. In addition, the lithium-transition metal composite oxide is preferably a compound represented by the following formula (1).

### (1): Li_{1+α}Me_{1-α}O₂

In the formula (1), Me is a metallic element other than Li, including Ni and Mn. The range of α is 0 ≤ α <1.

In the formula (1), α may be 0 or more and 0.5 or less, 0 or more and 0.3 or less, or 0 or more and 0.1 or less.

Also in the compound represented by the formula (1), the molar ratio of cobalt to manganese is less than 1.0, and the molar ratio of nickel to manganese is more than 1.0 and 1.5 or less. A preferred elemental composition of the metallic element Me in the formula (1) is the same as the preferred elemental composition of all the metallic elements (Me) excluding lithium in the lithium-transition metal composite oxide described above.

The lithium-transition metal composite oxide is usually in the form of particles (powder). An average particle diameter of the lithium-transition metal composite oxide is, for example, preferably 0.1 µm or more and 20 µm or less, more preferably 0.5 µm or more and 12 µm or less, still more preferably 1 µm or more and 8 µm or less, and yet still more preferably 2 µm or more and 5 µm or less. As the average particle diameter of the lithium-transition metal composite oxide is set to be not less than the above-described lower limit, manufacturing or handling of the lithium-transition metal composite oxide is facilitated. As the average particle diameter of the lithium-transition metal composite oxide is set to be not more than the above-described upper limit, electron conductivity of the positive active material layer is improved, and also, a reactive area is increased. As a result, the output performance and the like can also be enhanced. The "average particle diameter" refers to a value indicating 50% in a volume-based cumulative size distribution calculated according to JIS Z 8819-2:2001 on the basis of a particle size distribution measured by a laser diffraction and scattering method applied to a diluted solution in which particles are diluted with a solvent according to JIS Z 8825:2013.

In order to obtain powder having a predetermined particle diameter, a pulverizer, a classifier, or the like, is used. Examples of a method of pulverization include a method using a mortar, a ball mill, a sand mill, a vibrating ball mill, a planetary ball mill, a jet mill, an opposed jet mill, a spiral jet mill, a sieve, or the like. In performing the pulverization, wet pulverization in which water or an organic solvent such as hexane is present can also be used. As a method of classification, a sieve, an air classifier, or the like, is used as necessary in both a dry method and a wet method.

A BET specific surface area of the lithium-transition metal composite oxide is preferably 0.5 m²/g or more and 5 m²/g or less, and more preferably 1 m²/g or more and 3 m²/g or less. By using a lithium-transition metal composite oxide having a relatively large BET specific surface area, the output performance can be enhanced, for example.

The "BET specific surface area" of the lithium-transition metal composite oxide and graphite to be described later is a value obtained by measurement of the following procedure. 1.00 g of the lithium-transition metal composite oxide or graphite is placed in a sample tube for measurement and dried under reduced pressure at 120 °C for 12 hours. Next, by a nitrogen-gas adsorption method using liquid nitrogen, measurement is conducted for an adsorption isotherm in which a relative pressure P/P0 (P0 = approximately 770 mmHg) is within the range from 0 to 1. Five points are extracted from a region of the obtained adsorption isotherm where P/P0 is from 0.05 to 0.3 (P/P0 = 0.05 to 0.3) to perform BET plotting, and the BET specific surface area is calculated from the y-intercept and the slope of the plotted straight line. The BET specific surface area of the lithium-transition metal composite oxide is assumed to be a measured value obtained before charge and discharge or in a completely discharged state.

A content of the lithium-transition metal composite oxide in the positive active material layer is preferably 70% by mass or more and 99% by mass or less, more preferably 80% by mass or more and 98% by mass or less, and still more preferably 90% by mass or more and 95% by mass or less. As the content of the lithium-transition metal composite oxide is set to be within the above range, for example, the resistance after charge and discharge cycles can be further reduced, while achieving both high energy density and manufacturability of the positive active material layer.

The positive active material may further contain a positive active material other than the lithium-transition metal composite oxide. As the other positive active material, various conventionally known positive active materials can be used. However, the content of the lithium-transition metal composite oxide relative to all of the positive active materials contained in the positive active material layer is preferably 90% by mass or more, and more preferably 99% by mass or more. As described above, by using the lithium-transition metal composite oxide as the main ingredient of the positive active material, the advantageous effect of the present invention can be particularly sufficiently exhibited.

The content of all of the positive active materials in the positive active material layer is preferably 50% by mass or more and 99% by mass or less, more preferably 70% by mass or more and 98% by mass or less, and still more preferably 80% by mass or more and 95% by mass or less. As the content of all of the positive active materials is set to be within the above range, both high energy density and manufacturability of the positive active material layer can be achieved.

The conductive agent is not particularly limited as long as it is a material having conductivity. Examples of such a conductive agent include carbonaceous materials, metals, and conductive ceramic. Examples of the carbonaceous materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, and Ketjen black. Examples of the graphene-based carbon include graphene, carbon nanotubes (CNTs), and fullerene. Examples of the shape of the conductive agent include a powdery form and a fibrous form. As the conductive agent, one of these materials may be used alone, or two or more of these materials may be mixed and used. Moreover, these materials may be composited and used. For example, a composite material of carbon black and a CNT may be used. Among the above, carbon black is preferable and acetylene black is particularly preferable from the standpoint of electron conductivity and coatability.

The content of the conductive agent in the positive active material layer is preferably 1% by mass or more and 8% by mass or less, and more preferably 3% by mass or more and 5% by mass or less. As the content of the conductive agent is set to be within the above range, the energy density of the non-aqueous electrolyte energy storage device can be increased.

Examples of the binder include thermoplastic resins such as fluororesins (e.g. polytetrafluoroethylene (PTFE) and polyvinylidene fluoride (PVDF)), polyethylene, polypropylene, polyacrylate, and polyimide; elastomers such as ethylene-propylene-diene rubber (EPDM), sulfonated EPDM, styrene-butadiene rubber (SBR), and fluororubber; and polysaccharide polymers.

The content of the binder in the positive active material layer is preferably 1% by mass or more and 8% by mass or less, and more preferably 2% by mass or more and 5% by mass or less. As the content of the binder is set to be within the above range, the positive active material can be stably held.

Examples of the thickener include polysaccharide polymers such as carboxymethyl cellulose (CMC) and methyl cellulose. When the thickener has a functional group that reacts with lithium or the like, this functional group may be deactivated in advance by methylation or the like.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; and substances derived from mineral resources such as talc, montmorillonite, boehmite, zeolite, apatite, kaolin, mullite, spinel, olivine, sericite, bentonite, and mica or synthetic substances thereof.

The positive active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Nb, and W, as the constituents other than the positive active material, the conductive agent, the binder, the thickener, and the filler.

A porosity of the positive active material layer is preferably 25% or more and 55% or less, more preferably 30% or more and 50% or less, and still more preferably 35% or more and 45% or less. As the porosity of the positive active material layer is set to be in a relatively high range, the output performance can be enhanced, for example. The porosity of the positive active material layer can be adjusted via the particle diameter of the lithium-transition metal composite oxide, the press strength at the time of fabricating the positive electrode, and the like.

The "porosity" of the positive active material layer and a negative active material layer, which will be described later, is obtained from a calculation formula, which is (1 - V₂/V₁) × 100, where V₁ is an apparent volume (volume including voids) of the positive (negative) electrode active material layer, and V₂ is the sum of actual volumes of the materials constituting the positive (negative) electrode active material layer. The sum V₂ of the actual volumes of the materials constituting the positive (negative) electrode active material layer is calculated from the contents of the materials in the positive (negative) electrode active material layer and true densities of the materials.

A mass per unit area of a single positive active material layer is preferably 1 mg/cm² or more and 20 mg/cm² or less, more preferably 2 mg/cm² or more and 15 mg/cm² or less, and still more preferably 5 mg/cm² or more and 8 mg/cm² or less. As the mass per unit area of a single positive active material layer is set to be in a relatively small range, the output performance can be enhanced, for example.

The positive electrode can be fabricated by a known method. The positive electrode can be fabricated by, for example, applying a paste-like positive electrode mixture (a positive electrode mixture paste) onto a positive electrode substrate directly or via an intermediate layer and drying the paste-like positive electrode mixture, thereby forming a positive active material layer. The positive electrode mixture paste usually contains a lithium-transition metal composite oxide, other optional ingredients, and a dispersion medium. After performing the drying, pressing or the like may be performed for the positive active material layer.

### (Negative electrode)

A negative electrode includes a negative electrode substrate and a negative active material layer which is disposed on the negative electrode substrate directly or via an intermediate layer. A configuration of the intermediate layer is not particularly limited, and can be selected from the configurations exemplified for the positive electrode, for example.

The negative electrode substrate has conductivity. As the material of the negative electrode substrate, a metal such as copper, nickel, stainless steel, or nickel-plated steel, an alloy thereof, or a carbonaceous material or the like is used. Among the above, copper or a copper alloy is preferable. Examples of the negative electrode substrate include a foil, a vapor-deposited film, a mesh, and a porous material, and a foil is preferable from the standpoint of cost. Therefore, a copper foil or a copper alloy foil should preferably be used for the negative electrode substrate. Examples of the copper foil include a rolled copper foil and an electrolytic copper foil.

An average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. As the average thickness of the negative electrode substrate is set to be within the above range, the energy density per volume of the non-aqueous electrolyte energy storage device can be increased while increasing the strength of the negative electrode substrate.

The negative active material layer contains a negative active material. The negative active material layer contains, as necessary, optional ingredients such as a conductive agent, a binder, a thickener, and a filler. The optional ingredients such as the conductive agent, the binder, the thickener, and the filler can be selected from the materials exemplified for the positive electrode.

The negative active material layer may contain typical non-metallic elements such as B, N, P, F, Cl, Br, and I, typical metallic elements such as Li, Na, Mg, Al, K, Ca, Zn, Ga, Ge, Sn, Sr, and Ba, and transition metallic elements such as Sc, Ti, V, Cr, Mn, Fe, Co, Ni, Cu, Mo, Zr, Ta, Hf, Nb, and W as the constituents other than the negative active material, the conductive agent, the binder, the thickener, and the filler.

The negative active material contains graphite. The graphite may either be artificial graphite or natural graphite, but natural graphite is preferable. Natural graphite tends to have a larger specific surface area as compared to artificial graphite. Thus, by using natural graphite, the output performance can be enhanced, for example. As the graphite, it is also preferable that natural graphite whose surface is covered with non-graphitic carbon be used. As described above, graphite (natural graphite or the like) whose surface is covered with non-graphitic carbon has such advantages that the resistance is low.

"Natural graphite" refers to graphite obtained from natural resources. Natural graphite may be graphite in which four peaks appear in an X-ray diffraction pattern obtained by using a CuKα ray at a diffraction angle 2θ in a range of 40° to 50°. These four peaks are considered to be two peaks derived from a hexagonal structure and two peaks derived from a rhombohedral structure. In the case of artificial graphite, it is generally considered that only two peaks derived from a hexagonal structure appear. In the X-ray diffraction pattern, a ratio ((012)/(100)) of a peak intensity derived from a (012) plane to a peak intensity derived from a (100) plane is preferably not less than 0.3, and more preferably not less than 0.4. The above-mentioned peak intensity ratio ((012)/(100)) is preferably not greater than 0.6. Here, the (100) plane is derived from a hexagonal structure, and the (012) plane is derived from a rhombohedral structure.

The internal void ratio of the graphite is not particularly limited, and an upper limit thereof may be 5%, for example. However, the upper limit is preferably 2%, more preferably 1%, and still more preferably 0.5%. As the internal void ratio of the graphite is not more than the above-described upper limit, the resistance after charge and discharge cycles can be further reduced. A lower limit of the internal void ratio of the graphite may be 0%, or may be 0.05% or 0.1%. The internal void ratio of the graphite may be a combination of any of the above-described lower limits and any of the above-described upper limits (provided that the lower limit is smaller than the upper limit). As the graphite, for example, graphite obtained by subjecting spheroidized natural graphite particles to a consolidation treatment can be suitably used.

An average particle diameter of the graphite is preferably 1 µm or more and 50 µm or less, more preferably 3 µm or more and 30 µm or less, still more preferably 5 µm or more and 20 µm or less, and yet still more preferably 8 µm or more and 16 µm or less. As the average particle diameter of the graphite is set to be not less than the above-described lower limit, manufacturing or handling of the graphite is facilitated. As the average particle diameter of the graphite is set to be not more than the above-described upper limit, electron conductivity of the negative active material layer is improved, and also, a reactive area is increased. As a result, the output performance and the like can also be enhanced. In order to obtain powder having a predetermined particle diameter, a pulverizer, a classifier, or the like, is used. A method of pulverization and a method of classification can be selected, for example, from the methods exemplified for the positive electrode.

A BET specific surface area of the graphite is preferably 3 m²/g or more and 10 m²/g or less, and more preferably 4 m²/g or more and 8 m²/g or less. By using graphite having a relatively large BET specific surface area, the output performance can be enhanced, for example. The BET specific surface area of the graphite is assumed to be a measured value obtained before charge and discharge or in a completely discharged state.

The depth of charge of the graphite in a charged state is more than 0.40 and less than 0.65. A lower limit of the depth of charge may be 0.45, 0.50, 0.52, or 0.55. An upper limit of the depth of charge may be 0.62, 0.60, or 0.55. As the depth of charge of the graphite in the charged state is set to be within the above-described range, cracking of the lithium-transition metal composite oxide of the positive electrode due to the charge discharge cycles can be suppressed, and the resistance can be reduced. The depth of charge of the graphite in the charged state may be a combination of any of the above-described lower limits and any of the above-described upper limits (provided that the lower limit is smaller than the upper limit).

The depth of charge of the graphite in the charged state can be adjusted by, for example, changing the ratio between the mass of the positive active material per unit area in the positive active material layer and the mass of the graphite per unit area in the negative active material layer.

A content of the graphite in the negative active material layer is preferably 80% by mass or more and 99% by mass or less, more preferably 90% by mass or more and 98% by mass or less, and still more preferably 95% by mass or more in some cases. As the content of the graphite is set to be within the above range, for example, the resistance after charge and discharge cycles can be further reduced while achieving both high energy density and manufacturability of the negative active material layer.

The negative active material may contain a negative active material other than graphite. As the other negative active material, various conventionally known negative active materials can be used. However, the content of the graphite relative to all of the negative active materials contained in the negative active material layer is preferably 90% by mass or more, more preferably 99 % by mass or more, and may be substantially 100% by mass. As described above, by using graphite as the main ingredient of the negative active material, the resistance after charge and discharge cycles can be further reduced, for example. In addition, as the content of the graphite with respect to the negative active material is set to be not less than the above-described lower limit, the depth of charge of the graphite in the charged state can be designed highly accurately.

The content of all of the negative active materials in the negative active material layer is preferably 60% by mass or more and 99% by mass or less, and more preferably 90% by mass or more and 98% by mass or less. As the content of all of the negative active materials is set to be within the above range, both high energy density and manufacturability of the negative active material layer can be achieved.

When the negative active material layer contains the conductive agent, a content of the conductive agent in the negative active material layer is preferably 1% by mass or more and 10% by mass or less, more preferably 3% by mass or more and 9% by mass or less. The content of the conductive agent in the negative active material layer may be 5% by mass or less, or may be 2% by mass or less. The technique disclosed herein can also be implemented in an embodiment in which the negative active material layer contains no conductive agent.

When the negative active material layer contains a binder, a content of the binder in the negative active material layer is preferably 0.1% by mass or more and 10% by mass or less, more preferably 0.5% by mass or more and 8% by mass or less. The content of the binder in the negative active material layer may be 5% by mass or less, or may be 2% by mass or less.

When the negative active material layer contains the thickener, a content of the thickener in the negative active material layer is preferably 0.1% by mass or more and 10% by mass or less, more preferably 0.5% by mass or more and 8% by mass or less. The content of the thickener in the negative active material layer may be 5% by mass or less, or may be 2% by mass or less. The technique disclosed herein can also be implemented in an embodiment in which the negative active material layer contains no thickener.

When the negative active material layer contains a filler, a content of the filler in the negative active material layer can be 0.1% by mass or more and 8% by mass or less and is usually preferably 5% by mass or less, and more preferably 2% by mass or less. The technique disclosed herein can also be implemented in an embodiment in which the negative active material layer contains no filler.

A porosity of the negative active material layer is preferably 30% or more and 60% or less, more preferably 35% or more and 55% or less, and still more preferably 40% or more and 50% or less. As the porosity of the negative active material layer is set to be in a relatively high range, the output performance can be enhanced, for example. The porosity of the negative active material layer can be adjusted via the particle diameter of the graphite, the press strength at the time of fabricating the negative electrode, and the like.

A mass per unit area of a single negative active material layer is preferably 1 mg/cm² or more and 10 mg/cm² or less, more preferably 2 mg/cm² or more and 7 mg/cm² or less, and still more preferably 3 mg/cm² or more and 5 mg/cm² or less. As the mass per unit area of a single negative active material layer is set to be in a relatively small range, the output performance can be enhanced, for example.

The negative electrode can be fabricated by a known method. As in the above-described method for fabricating the positive electrode, the negative electrode can be fabricated by, for example, applying a paste-like negative electrode mixture (a negative electrode mixture paste) onto a negative electrode substrate directly or via an intermediate layer and drying the paste-like negative electrode mixture, thereby forming a negative active material layer. After performing the drying, pressing or the like may be performed for the negative active material layer.

### (Separator)

A separator can be selected as appropriate from known separators. As the separator, for example, a separator formed of only a base material layer, a separator in which a heat-resistant layer containing heat-resistant particles and a binder is formed on one surface or both surfaces of the base material layer, or the like, can be used. Examples of the shape of the base material layer of the separator include a woven fabric, a nonwoven fabric, and a porous resin film. Among these shapes, a porous resin film is preferable from the standpoint of the strength, and a nonwoven fabric is preferable from the standpoint of liquid retainability of the non-aqueous electrolyte. As the material of the base material layer of the separator, for example, polyolefins such as polyethylene and polypropylene are preferable from the standpoint of a shutdown function, and polyimide, aramid, and the like, are preferable from the standpoint of oxidative decomposition resistance. A composite material of these resins may be used as the base material layer of the separator.

The heat-resistant particles contained in the heat-resistant layer should preferably have a mass decrease of not more than 5% when heated from room temperature to 500 °C in an air atmosphere at 1 atm, and more preferably have a mass decrease of not more than 5% when heated from the room temperature to 800 °C. Examples of the material in which a mass decrease is not greater than a predetermined amount include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources such as talc, montmorillonite, boehmite, zeolite, apatite, kaolin, mullite, spinel, olivine, sericite, bentonite, and mica or synthetic substances thereof. As the inorganic compound, each of these substances, whether in its individual form or as a composite, may be used alone, or two or more of these substances may be mixed and used. Among these inorganic compounds, silicon oxide, aluminum oxide, or aluminosilicate is preferable from the standpoint of safety of the non-aqueous electrolyte energy storage device.

A void content of the separator is preferably not greater than 80% by volume from the standpoint of strength, and is preferably not less than 20% by volume from the standpoint of discharge performance. Here, the term "void content" refers to a value based on volume, and means a value measured by a mercury porosimeter.

As the separator, a polymer gel composed of a polymer and a non-aqueous electrolyte may be used. Examples of the polymer include polyacrylonitrile, polyethylene oxide, polypropylene oxide, polymethyl methacrylate, polyvinyl acetate, polyvinylpyrrolidone, and polyvinylidene fluoride. The use of the polymer gel brings about an advantageous effect that liquid leakage is suppressed. As the separator, the above-described porous resin film or nonwoven fabric may be used in combination with the polymer gel.

### (Non-aqueous electrolyte)

A non-aqueous electrolyte can be selected as appropriate from known non-aqueous electrolytes. As the non-aqueous electrolyte, a non-aqueous electrolytic solution may be used. The non-aqueous electrolytic solution contains a non-aqueous solvent and an electrolyte salt dissolved in this non-aqueous solvent.

The non-aqueous solvent can be selected as appropriate from known non-aqueous solvents. Examples of the non-aqueous solvent include cyclic carbonates, linear carbonates, carboxylic acid esters, phosphoric acid esters, sulfonic acid esters, ethers, amides, and nitriles. As the non-aqueous solvent, those obtained by substituting a part of hydrogen atoms contained in these compounds with a halogen may be used.

Examples of the cyclic carbonates include ethylene carbonate (EC), propylene carbonate (PC), butylene carbonate (BC), vinylene carbonate (VC), vinylethylene carbonate (VEC), chloroethylene carbonate, fluoroethylene carbonate (FEC), difluoroethylene carbonate (DFEC), styrene carbonate, 1-phenylvinylene carbonate, and 1,2-diphenylvinylene carbonate. Among the above, EC is preferable.

Examples of the linear carbonates include diethyl carbonate (DEC), dimethyl carbonate (DMC), ethyl methyl carbonate (EMC), diphenyl carbonate, trifluoroethyl methyl carbonate, and bis(trifluoroethyl) carbonate. Among the above, EMC is preferable.

As the non-aqueous solvent, a cyclic carbonate or a linear carbonate is preferably used, and using a cyclic carbonate and a linear carbonate in combination is more preferable. By using the cyclic carbonate, dissociation of the electrolyte salt can be promoted to improve ionic conductivity of the non-aqueous electrolytic solution. By using the linear carbonate, viscosity of the non-aqueous electrolytic solution can be suppressed to be low. When a cyclic carbonate and a linear carbonate are used in combination, the volume ratio of the cyclic carbonate to the linear carbonate (cyclic carbonate: linear carbonate) is preferably, for example, in the range of 5:95 to 50:50.

As the electrolyte salt, a lithium salt is used. Examples of the lithium salt include inorganic lithium salts such as LiPF₆, LiPO₂F₂, LiBF₄, LiClO₄, and LiN(SO₂F)₂; lithium oxalate salts such as lithium bis(oxalato)borate (LiBOB), lithium difluoro(oxalato)borate (LiFOB), and lithium bis(oxalate)difluorophosphate (LiFOP); and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among the above, inorganic lithium salts are preferable, and LiPF₆, in particular, is preferable.

A content of the electrolyte salt in the non-aqueous electrolytic solution is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less, at 20 °C and at 1 atm. As the content of the electrolyte salt is set to be within the above range, the ionic conductivity of the non-aqueous electrolytic solution can be increased.

The non-aqueous electrolytic solution may contain an additive, apart from the non-aqueous solvent and the electrolyte salt. Examples of the additive include aromatic compounds such as biphenyl, alkylbiphenyl, terphenyl, partially hydrogenated terphenyl, cyclohexylbenzene, t-butylbenzene, t-amylbenzene, diphenyl ether, and dibenzofuran; partially halogenated derivatives of the above aromatic compounds, such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; vinylene carbonate, methyl vinylene carbonate, ethyl vinylene carbonate, succinic anhydride, glutaric anhydride, maleic anhydride, citraconic anhydride, glutaconic anhydride, itaconic acid anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propene sultone, 1,3-propane sultone, 1,4-butane sultone, 1,4-butene sultone, perfluorooctane, tris(trimethylsilyl)borate, tris(trimethylsilyl)phosphate, and tetrakis(trimethylsilyl)titanate. One of these additives may be used alone, or two or more of these additives may be mixed and used.

A content of the additive contained in the non-aqueous electrolytic solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to the mass of the whole non-aqueous electrolytic solution. As the content of the additive is set to be within the above range, the capacity retention performance or cycle performance after being subjected to high-temperature storage can be improved, and the safety can be further improved.

As the non-aqueous electrolyte, a solid electrolyte may be used, or a non-aqueous electrolytic solution and a solid electrolyte may be used in combination.

The solid electrolyte can be selected from any materials that have lithium ion conductivity and are solid at ordinary temperature (for example, 15 °C to 25 °C). Examples of the solid electrolyte include sulfide solid electrolytes, oxide solid electrolytes, nitride solid electrolytes, and polymer solid electrolytes. Examples of the sulfide solid electrolyte include Li₂S-P₂S₅, LiI-Li₂S-P₂S₅, and Li₁₀Ge-P₂S₁₂.

### (Application and the like)

The application of the non-aqueous electrolyte energy storage device according to one embodiment of the present invention is not particularly limited, and the non-aqueous electrolyte energy storage device can be used for various applications similarly to conventional non-aqueous electrolyte energy storage devices. Meanwhile, resistance after charge and discharge cycles of the non-aqueous electrolyte energy storage device according to one embodiment of the present invention is low. Furthermore, the non-aqueous electrolyte energy storage device according to one embodiment of the present invention can be designed such that the amount of electricity charged per mass of the positive active material is large, high power can be output, and the like. Accordingly, the non-aqueous electrolyte energy storage device can be particularly suitably used in applications in which such performances are required. The non-aqueous electrolyte energy storage device is suitable as, for example, a power source for an automobile such as an electric vehicle (EV), a hybrid electric vehicle (HEV), or a plug-in hybrid electric vehicle (PHEV), and is particularly suitable for the HEV.

The shape of the non-aqueous electrolyte energy storage device of the present embodiment is not particularly limited, and examples of the non-aqueous electrolyte energy storage device include a cylindrical battery, a prismatic battery, a flat-type battery, a coin battery, and a button battery.

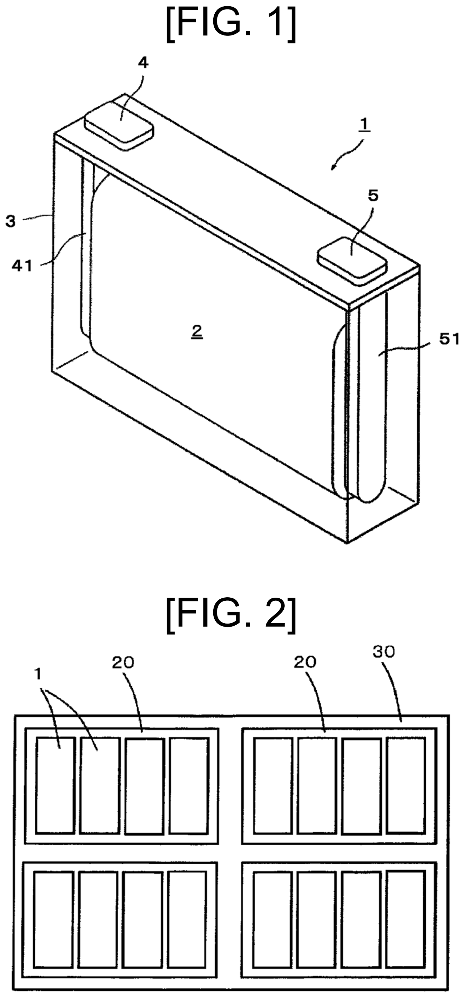

FIG. 1 illustrates a non-aqueous electrolyte energy storage device 1 as an example of the prismatic battery. FIG. 1 is a view in which the inside of a container is seen through. An electrode body 2 including a positive electrode and a negative electrode which are wound with a separator interposed therebetween is accommodated in a prismatic container 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The non-aqueous electrolyte energy storage device of the present embodiment can be mounted as an energy storage unit (a battery module) which is configured by assembling a plurality of non-aqueous electrolyte energy storage devices in a power source for automobiles such as the above-mentioned HEVs, a power source for electronic devices such as personal computers or communication terminals, or a power source for power storage, and the like. In this case, it is sufficient if the technique of the present invention is applied to at least one non-aqueous electrolyte energy storage device included in the energy storage unit.

FIG. 2 illustrates an example of an energy storage apparatus 30 in which energy storage units 20, which are each configured by assembling two or more electrically connected non-aqueous electrolyte energy storage devices 1, are further assembled. The energy storage apparatus 30 may include a bus bar (not illustrated) that electrically connects two or more non-aqueous electrolyte energy storage devices 1, a bus bar (not illustrated) that electrically connects two or more energy storage units 20, and the like. The energy storage unit 20 or the energy storage apparatus 30 may include a state monitoring apparatus (not illustrated) which monitors the state of one or more non-aqueous electrolyte energy storage devices.

### <Method for manufacturing non-aqueous electrolyte energy storage device>

A method for manufacturing the non-aqueous electrolyte energy storage device of the present embodiment can be selected as acquired from known methods. The method for manufacturing includes, for example, preparing an electrode body, preparing a non-aqueous electrolyte, and accommodating the electrode body and the non-aqueous electrolyte in a container. Preparing the electrode body includes preparing a positive electrode and a negative electrode, and forming the electrode body by stacking or winding the positive electrode and the negative electrode with a separator interposed therebetween.

Accommodating the non-aqueous electrolyte in the container can be selected as appropriate from known methods. For example, when a non-aqueous electrolytic solution is used as the non-aqueous electrolyte, the non-aqueous electrolytic solution may be injected into the container through an inlet formed therein, and then the inlet may be sealed.

### <Other embodiments>

The non-aqueous electrolyte energy storage device according to the present invention is not limited to the above-described embodiment, and various alterations may be made within a range that does not depart from the gist of the present invention. For example, in a configuration of one embodiment, a configuration of another embodiment may be added, or a part of the configuration of the one embodiment may be replaced with the configuration of the other embodiment or with a well-known technique. Further, a part of the configuration of the one embodiment may be deleted. Furthermore, a well-known technique may be added to the configuration of the one embodiment.

In the above-described embodiment, the case where the non-aqueous electrolyte energy storage device is used as a chargeable and dischargeable non-aqueous electrolyte secondary battery (a lithium-ion secondary battery) has been described. However, the non-aqueous electrolyte energy storage device may be of any type, shape, size, and capacity. The present invention can also be applied to various secondary batteries and capacitors such as an electric double layer capacitor or a lithium-ion capacitor.

In the above-described embodiment, the electrode body in which the positive electrode and the negative electrode are stacked with the separator interposed therebetween has been described. However, the electrode body may not include a separator. For example, the positive electrode and the negative electrode may be in contact with each other directly in such a state that a layer having no conductivity is formed on the active material layer of the positive electrode or the negative electrode.

### EXAMPLES

The present invention will be more specifically described with reference to Examples, but the present invention is not limited to the Examples described below.

### [Example 1]

### (Preparation of positive electrode)

A positive electrode mixture paste was prepared by using LiNi_{0.45}Co_{0.15}Mn_{0.40}O₂ as a lithium-transition metal composite oxide, acetylene black (AB) as a conductive agent, polyvinylidene fluoride (PVDF) as a binder, and N-methylpyrrolidone (NMP) as a dispersion medium. A mass ratio of the lithium-transition metal composite oxide, AB, and PVDF in terms of solid content was 93.0:3.5:3.5. The positive electrode mixture paste was applied onto a surface of an aluminum foil as a positive electrode substrate, and dried. Then, roll pressing was performed to obtain a positive electrode. An application quantity of the positive electrode mixture paste in terms of solid content (i.e., the mass per unit area of a single positive active material layer) was adjusted in the range of 5 to 8 mg/cm² so that a depth of charge of graphite in the charged state indicates the value shown in Table 1. The porosity of the formed positive active material layer was 40%.

### (Preparation of negative electrode)

A negative electrode mixture paste was prepared by using natural graphite as graphite, styrene-butadiene rubber (SBR) as a binder, carboxymethyl cellulose (CMC) as a thickener, and water as a dispersion medium. A mass ratio of the graphite, SBR, and CMC in terms of solid content was 97.5:1.5:1.0. The negative electrode mixture paste was applied onto a surface of a copper foil as a negative electrode substrate, and dried. Then, roll pressing was performed to obtain a negative electrode. An application quantity of the negative electrode mixture paste in terms of solid content (i.e., the mass per unit area of a single negative active material layer) was adjusted in the range of 3 to 5 mg/cm² so that the depth of charge of the graphite in the charged state indicates the value shown in Table 1. The porosity of the formed negative active material layer was 45%. Also, an internal void ratio of the graphite obtained by the above-described method was 3%.

### (Non-aqueous electrolyte)

LiPF₆ was dissolved at a concentration of 1.2 mol/dm³ in a mixed solvent in which ethylene carbonate and ethyl methyl carbonate were mixed at a volume ratio of 30:70, thereby obtaining a non-aqueous electrolyte (non-aqueous electrolytic solution).

### (Separator)

A polyolefin microporous film was used as a separator.

### (Assembly of non-aqueous electrolyte energy storage device)

The positive electrode, the negative electrode, and the separator were used to obtain a stacked type electrode body. The electrode body was accommodated in a container, the non-aqueous electrolyte was injected into the container, and the container was sealed to obtain a non-aqueous electrolyte energy storage device of Example 1.

### [Examples 2 to 5 and Comparative Examples 1 to 9]

Non-aqueous electrolyte energy storage devices of Examples 2 to 5 and Comparative Examples 1 to 9 were obtained in the same manner as in Example 1, except that the lithium-transition metal composite oxides of the types shown in Table 1 and the graphites having the internal void ratios shown in Table 1 were used, and that application quantities of the positive electrode mixture paste and the negative electrode mixture paste in terms of solid content were adjusted so that the depth of charges of the graphite in the charged state indicate the values shown in Table 1.

The lithium-transition metal composite oxides used in the Examples and Comparative Examples all had the average particle diameter in the range of 2 to 4 µm and the BET specific surface area in the range of 1 to 3 m²/g. Also, the graphites that were used were all natural graphite having the average particle diameter in the range of 8 to 15 µm and the BET specific surface area in the range of 5 to 8 m²/g.

### [Evaluation]

### (1) Initial discharge capacity confirmation test

For each of the obtained non-aqueous electrolyte energy storage devices, an initial discharge capacity confirmation test was conducted under the following conditions. In a constant-temperature bath at 25 °C, a constant current charge was performed at a charge current of 1.0 C with a charge cutoff voltage being set to 4.10 V, and then a constant voltage charge was performed at 4.10 V. A condition for terminating the charge was set to the time when a total charge time reached 3 hours. In this way, an initial charge capacity was measured. After that, a rest period of 10 minutes was provided. A constant current discharge was performed at a discharge current of 1.0 C with a discharge cutoff voltage being set to 2.50 V. In this way, an initial discharge capacity was measured. In addition, an amount of electricity of the initial charge in the initial discharge capacity confirmation test was divided by the mass of the positive active material to calculate the amount of electricity charged per mass of the positive active material. The calculated amount of electricity charged per mass of the positive active material is shown in Table 1 as a relative value based on the value of Comparative Example 1 (set as 100%).

### (2) Positive electrode potential at SOC of 50%

For each of the non-aqueous electrolyte energy storage devices according to the Examples and Comparative Examples after the above-described initial discharge capacity confirmation test, a constant current charge was performed at a charge current of 1.0 C, in a constant-temperature bath at 25 °C, to charge electricity by an amount corresponding to 50% of the initial discharge capacity to adjust the SOC to 50%. Then, a reference electrode using metal lithium was inserted into each of the non-aqueous electrolyte energy storage devices, and the positive electrode potential when each of the non-aqueous electrolyte energy storage devices was adjusted to the SOC of 50% was measured. The results are shown in Table 1.

### (3) Direct current resistance (DCR) after charge and discharge cycles

Next, for each of the non-aqueous electrolyte energy storage devices according to the Examples and Comparative Examples after the above-described initial discharge capacity confirmation test, the following charge and discharge cycle test was conducted. In a constant-temperature bath at 60 °C, a constant current charge was performed at a charge current of 4.0 C to charge electricity by an amount corresponding to 85% of the initial discharge capacity to adjust the non-aqueous electrolyte energy storage device to the SOC of 85%. Then, without providing a rest period, a constant current discharge was performed at a discharge current of 4.0 C to discharge electricity by an amount corresponding to 70% of the initial discharge capacity to adjust the non-aqueous electrolyte energy storage device to the SOC of 15%. Subsequently, without providing a rest period, a constant current charge was performed to charge electricity by an amount corresponding to 70% of the initial discharge capacity to adjust the non-aqueous electrolyte energy storage device to the SOC of 85%. Then, without providing a rest period, a constant current discharge was performed at a discharge current of 4.0 C to discharge electricity by an amount corresponding to 70% of the initial discharge capacity to adjust the non-aqueous electrolyte energy storage device to the SOC of 15%. This charge and discharge was repeated for 2900 hours in total.

Then, a DC resistance was measured in the following manner. Each of the non-aqueous electrolyte energy storage devices was stored in a constant-temperature bath at 25 °C for 3 hours, and then a constant current charge was performed at a current of 1.0 C at 25 °C to set the SOC to 50%. Then, a discharge was performed for 30 seconds at a constant current of 0.2 C, 0.5 C, or 1.0 C at 25 °C. After the discharges have been finished, a constant current charge was performed at a current of 0.2 C to adjust the SOC to 50%. The relationship between the current and the voltage indicated after 10 seconds from the start of discharge in each discharge was plotted, and a direct current resistance (DCR) of the non-aqueous electrolyte energy storage device after the charge and discharge cycles was acquired from the slope of a straight line obtained from the plotted three points. A relative value based on the value of Comparative Example 1 (set as 100%) was calculated for the acquired DCR after the charge and discharge cycles, and is shown in Table 1 as the DCR after the charge and discharge cycles (relative value).

**[Table 1]**

| | Lithium-transition metal composite oxide | | | Graphite | | Amount of electricity charged (relative value) / % | Positive electrode potential at SOC of 50% / V vs. Li⁺/Li | DCR after charge and discharge cycles (relative value) / % |
|---|---|---|---|---|---|---|---|---|
| | - | Ratio (Co/Mn) | Ratio (Ni/Mn) | Internal void ratio / % | Depth of charge | | | |
| Example 1 | LiNi_{0.45}Co_{0.15}Mn_{0.45}O₂ | 0.38 | 1.13 | 3 | 0.58 | 98 | 3.85 | 102 |
| Example 2 | LiNi_{0.43}Co_{0.25}Mn_{0.30}O₂ | 0.83 | 1.50 | 3 | 0.58 | 103 | 3.80 | 101 |
| Example 3 | LiNi_{0.45}Co_{0.20}Mn_{0.35}O₂ | 0.57 | 1.29 | 3 | 0.53 | 101 | 3.83 | 102 |
| Example 4 | LiNi_{0.45}Co_{0.20}Mn_{0.35}O₂ | 0.57 | 1.29 | 3 | 0.58 | 101 | 3.83 | 98 |
| Example 5 | LiNi_{0.45}Co_{0.20}Mn_{0.35}O₂ | 0.57 | 1.29 | 0.3 | 0.58 | 101 | 3.83 | 95 |
| Comparative Example 1 | LiNi_{0.33}Co_{0.33}Mn_{0.33}O₂ | 1.00 | 1.00 | 3 | 0.58 | 100 | 3.80 | 100 |
| Comparative Example 2 | LiNi_{0.45}Co_{0.35}Mn_{0.20}O₂ | 1.75 | 2.25 | 3 | 0.58 | 105 | 3.76 | 104 |
| Comparative Example 3 | LiNi_{0.50}Co_{0.20}Mn_{0.30}O₂ | 0.67 | 1.67 | 3 | 0.58 | 107 | 3.79 | 104 |
| Comparative Example 4 | LiNi_{0.50}Co_{0.30}Mn_{0.20}O₂ | 1.50 | 2.50 | 3 | 0.58 | 108 | 3.77 | 104 |
| Comparative Example 5 | LiNi_{0.60}Co_{0.03}Mn_{0.37}O₂ | 0.08 | 1.62 | 3 | 0.45 | 78 | 3.83 | 187 |
| Comparative Example 6 | LiNi_{0.60}Co_{0.20}Mn_{0.20}O₂ | 1.00 | 3.00 | 3 | 0.58 | 114 | 3.78 | 106 |
| Comparative Example 7 | LiNi_{0.60}Co_{0.35}Mn_{0.05}O₂ | 7.00 | 12.0 | 3 | 0.58 | 110 | 3.73 | 108 |
| Comparative Example 8 | LiNi_{0.45}Co_{0.20}Mn_{0.35}O₂ | 0.57 | 1.29 | 3 | 0.65 | 101 | 3.83 | *105* |
| Comparative Example 9 | LiNi_{0.45}Co_{0.20}Mn_{0.35}O₂ | 0.57 | 1.29 | 3 | 0.40 | 101 | 3.83 | 122 |

As shown in Table 1, as compared with the non-aqueous electrolyte energy storage device of Comparative Example 1 in which LiNi_{0.33}Co_{0.33}Mn_{0.33}O₂ whose ratio of Co to Mn (Co/MMn) was 1.00 was used for the positive active material, in each of the non- aqueous electrolyte energy storage devices of Comparative Examples 3 and 5 in which the lithium-transition metal composite oxide whose ratio of Co to Mn (Co/Mn) was less than 1.00 and whose ratio of Ni to Mn (Ni/Mn) was more than 1.5 was used for the positive electrode, the DCR after the charge and discharge cycles (relative value) was greater than or equal to 104%. Also in each of the non-aqueous electrolyte energy storage devices of Comparative Examples 2, 4, 6, and 7 in which the lithium-transition metal composite oxide whose ratio of Co to Mn (Co/Mn) was 1.0 or more was used for the positive electrode, the DCR after the charge and discharge cycles (relative value) was greater than or equal to 104%. In addition, in each of the non-aqueous electrolyte energy storage devices of Comparative Examples 8 and 9 in which the depth of charge of the graphite in the charged state was not appropriate, the DCR after the charge and discharge cycles (relative value) was not less than 104%.

In contrast, in each of the non-aqueous electrolyte energy storage devices of Examples 1 to 5 in which the lithium-transition metal composite oxide whose ratio of Co to Mn (Co/Mn) was less than 1.0 and whose ratio of Ni to Mn (Ni/Mn) was more than 1.0 and 1.5 or less was used for the positive electrode, and the depth of charge of the graphite in the charged state was set to more than 0.40 and less than 0.65, the DCR after the charge and discharge cycles (relative value) was less than or equal to 102%. Each of the non-aqueous electrolyte energy storage devices of the Examples was a non-aqueous electrolyte energy storage device for which a lithium-transition metal composite oxide having a low cobalt content was used, and the resistance after the charge and discharge cycles was low. Among the non-aqueous electrolyte energy storage devices of the Examples, the resistance after the charge and discharge cycles was particularly low in the non-aqueous electrolyte energy storage device of Example 5 in which graphite whose internal void ratio was low was used for the negative electrode. Further, in each of the non-aqueous electrolyte energy storage devices of the Examples, the amount of electricity charged per mass of the positive active material was sufficiently large. Furthermore, from the results of Table 1, it has been confirmed that the positive electrode potential at the SOC of 50% tends to increase by increasing the molar ratio (Mn/Me) of manganese to all the metallic elements (Me) excluding lithium in the lithium-transition metal composite oxide.

### [Examples 6 and 7 and Comparative Examples 10 to 12]

Non-aqueous electrolyte energy storage devices of Examples 6 and 7 and Comparative Examples 10 to 12 were obtained in the same manner as in Example 1, except that the lithium-transition metal composite oxides of the types shown in Table 2 and the graphites having the internal void ratios shown in Table 2 were used, and that application quantities of the positive electrode mixture paste and the negative electrode mixture paste in terms of solid content were adjusted so that the depth of charges of the graphite in the charged state indicate the values shown in Table 2.

### [Evaluation]

### (4) Initial discharge capacity confirmation test

For each of the obtained non-aqueous electrolyte energy storage devices, an initial discharge capacity confirmation test was conducted under the same conditions and by the same procedure as in "(1) Initial discharge capacity confirmation test" described above, and the initial discharge capacity was measured.

In addition, the amount of electricity of the initial charge in the initial discharge capacity confirmation test was divided by the mass of the positive active material to calculate the amount of electricity charged per mass of the positive active material. The calculated amount of electricity charged per mass of the positive active material is shown in Table 2 as a relative value based on the value of Comparative Example 12 (set as 100%).

### (5) Positive electrode potential at SOC of 50%

For each of the non-aqueous electrolyte energy storage devices according to the Examples and Comparative Examples after the above-described initial discharge capacity confirmation test, a constant current charge was performed at a charge current of 1.0 C, in a constant-temperature bath at 25 °C, to charge electricity by an amount corresponding to 50% of the initial discharge capacity to adjust the SOC to 50%. Then, a reference electrode using metallic lithium was inserted into each of the non-aqueous electrolyte energy storage devices, and the positive electrode potential when each of the non-aqueous electrolyte energy storage devices was adjusted to the SOC of 50% was measured. The results are shown in Table 2.

### (6) DCR after charge and discharge cycles

Next, for each of the non-aqueous electrolyte energy storage devices according to the Examples and Comparative Examples after the above-described initial discharge capacity confirmation test, the following charge and discharge cycle test was conducted. In a constant-temperature bath at 60 °C, a constant current charge was performed at a charge current of 8.0 C to charge electricity by an amount corresponding to 80% of the initial discharge capacity to adjust the non-aqueous electrolyte energy storage device to the SOC of 80%. Then, without providing a rest period, a constant current discharge was performed at a discharge current of 8.0 C to discharge electricity by an amount corresponding to 60% of the initial discharge capacity to adjust the non-aqueous electrolyte energy storage device to the SOC of 20%. Subsequently, without providing a rest period, a constant current charge was performed to charge electricity by an amount corresponding to 60% of the initial discharge capacity to adjust the non-aqueous electrolyte energy storage device to the SOC of 80%. Then, without providing a rest period, a constant current discharge was performed at a discharge current of 8.0 C to discharge electricity by an amount corresponding to 60% of the initial discharge capacity to adjust the non-aqueous electrolyte energy storage device to the SOC of 20%. This charge and discharge was repeated for 2500 hours in total.

Then, a DC resistance was measured in the following manner. Each of the non-aqueous electrolyte energy storage devices was stored in a constant-temperature bath at 25 °C for 3 hours, and then a constant current charge was performed at a current of 1.0 C at 25 °C to set the SOC to 70%. Then, a discharge was performed for 30 seconds at a constant current of 0.2 C, 0.5 C, or 1.0 C at 25 °C. After the discharges have been finished, a constant current charge was performed at a current of 0.2 C to adjust the SOC to 70%. The relationship between the current and the voltage indicated after 10 seconds from the start of discharge in each discharge was plotted, and a direct current resistance (DCR) of the non-aqueous electrolyte energy storage device after the charge and discharge cycles was acquired from the slope of a straight line obtained from the plotted three points. A relative value based on the value of Comparative Example 12 (set as 100%) was calculated for the acquired DCR after the charge and discharge cycles, and is shown in Table 2 as the DCR after the charge and discharge cycles (relative value).

**[Table 2]**

| | lithium-transition metal composite oxide | | | Graphite | | Amount of electricity charged (relative value) / % | Positive electrode potential at SOC of 50% / V vs. Li⁺/Li | DCR after charge and discharge cycles (relative value) / % |
|---|---|---|---|---|---|---|---|---|
| | - | Ratio (Co/Mn) | Ratio (Ni/Mn) | Internal void ratio / % | Depth of charge | | | |
| Example 6 | LiNi_{0.45}Co_{0.20}Mn_{0.35}O₂ | 0.57 | 1.29 | 3 | 0.54 | 101 | 3.83 | 100 |
| Example 7 | LiNi_{0.45}Co_{0.20}Mn_{0.35}O₂ | 0.57 | 1.29 | 0.3 | 0.54 | 101 | 3.83 | 98 |
| Comparative Example 10 | LiNi_{0.45}Co_{0.35}Mn_{0.20}O₂ | 1.75 | 2.25 | 3 | 0.54 | 105 | 3.76 | 103 |
| Comparative Example 11 | LiNi_{0.45}Co_{0.35}Mn_{0.20}O₂ | 1.75 | 2.25 | 0.3 | 0.54 | 105 | 3.76 | 103 |
| Comparative Example 12 | LiNi_{0.33}Co_{0.33}Mn_{0.33}O₂ | 1.00 | 1.00 | 0.3 | 0.54 | 100 | 3.80 | 100 |

As shown in Table 2, as compared with the non-aqueous electrolyte energy storage device of Comparative Example 12 in which LiNi_{0.33}Co_{0.33}Mn_{0.33}O₂ whose ratio of Co to Mn (Co/Mn) was 1.00 was used for the positive active material, in each of the non-aqueous electrolyte energy storage devices of Comparative Examples 10 and 11 in which the lithium-transition metal composite oxide whose ratio of Co to Mn (Co/Mn) was not less than 1.00 and whose ratio of Ni to Mn (Ni/Mn) was more than 1.5 was used for the positive electrode, the DCR after the charge and discharge cycles (relative value) was 103% irrespective of the internal void ratio of the graphite used for the negative electrode.

In contrast, in each of the non-aqueous electrolyte energy storage devices of Examples 6 and 7 in which the lithium-transition metal composite oxide whose ratio of Co to Mn (Co/Mn) was less than 1.0 and whose ratio of Ni to Mn (Ni/Mn) was more than 1.0 and 1.5 or less was used for the positive electrode, and the depth of charge of the graphite in the charged state was set to more than 0.40 and less than 0.65, the DCR after the charge and discharge cycles (relative value) was less than or equal to 100%. Each of the non-aqueous electrolyte energy storage devices of the Examples was a non-aqueous electrolyte energy storage device for which a lithium-transition metal composite oxide having a low cobalt content was used, and the resistance after the charge and discharge cycles was low. Of these non-aqueous electrolyte energy storage devices of the Examples, the resistance after the charge and discharge cycles was particularly low in the non-aqueous electrolyte energy storage device of Example 7 in which graphite whose internal void ratio was low was used for the negative electrode. Further, in each of the non-aqueous electrolyte energy storage devices of the Examples, the amount of electricity charged per mass of the positive active material was sufficiently large. Furthermore, from the results of Table 2, it has been confirmed that the positive electrode potential at the SOC of 50% tends to increase by increasing the molar ratio (Mn/Me) of manganese to all the metallic elements (Me) excluding lithium in the lithium-transition metal composite oxide.

### INDUSTRIAL APPLICABILITY

The present invention can be applied to non-aqueous electrolyte energy storage devices and the like which are used as power sources of electronic devices such as personal computers or communication terminals, automobiles, and the like.

### DESCRIPTION OF REFERENCE NUMERALS

1 Non-aqueous electrolyte energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A non-aqueous electrolyte energy storage device comprising:
a positive electrode including a lithium-transition metal composite oxide containing nickel and manganese; and
a negative electrode including graphite, wherein
a molar ratio of cobalt to manganese in the lithium-transition metal composite oxide is less than 1.0,
a molar ratio of nickel to manganese in the lithium-transition metal composite oxide is more than 1.0 and 1.5 or less, and
the depth of charge of the graphite in a charged state is more than 0.40 and less than 0.65.

2. The non-aqueous electrolyte energy storage device according to claim 1,
wherein the molar ratio of cobalt to manganese in the lithium-transition metal composite oxide is 0.15 or more and less than 1.0.

3. The non-aqueous electrolyte energy storage device according to claim 1 or 2, wherein an internal void ratio of the graphite is 2% or less.

4. The non-aqueous electrolyte energy storage device according to claim 1 or 2, wherein the non-aqueous electrolyte energy storage device is used for a hybrid electric vehicle.
